# EUROPÄISCHE PATENTSCHRIFT

(11) **EP 4 240 569 B1**
(45) Veröffentlichungstag und Bekanntmachung des Hinweises auf die Patenterteilung: **06.05.2026**
(21) Anmeldenummer: 21793878.6
(22) Anmeldetag: 11.10.2021
(51) Int. Cl.: B29C 35/10, B29C 35/02, B29C 70/52, E06B 3/22, C08J 3/24, B29C 70/00, B29D 24/00, C08J 5/04, B29C 48/156, B29C 48/34

(54) **VERFAHREN ZUR HERSTELLUNG EINES FASERVERSTÄRKTEN POLYMEREN ENDLOSPROFILS**
PROCESS FOR MANUFACTURING A FIBER REINFORCED POLYMER CONTINUOUS PROFILE
PROCÉDÉ DE FABRICATION D'UN PROFIL CONTINU EN POLYMÈRE RENFORCÉ DE FIBRE

(30) Priorität: 04.11.2020 DE 102020129070
(43) Veröffentlichungstag der Anmeldung: 13.09.2023
(73) Patentinhaber: REHAU Industries SE & Co. KG, 95111 Rehau (DE)
(72) Erfinder: GERBER, Nils, 95111 Rehau (DE); AL-SHEYYAB, Ahmad, 95111 Rehau (DE); SELL, Stephan, 39126 Magdeburg (DE)
(86) Internationale Anmeldenummer: PCT/EP2021/077987
(87) Internationale Veröffentlichungsnummer: WO 2022/096227

(56) Entgegenhaltungen:
- CN-A- 101 831 141
- CN-A- 105 946 255
- CN-A- 110 437 390
- DE-A1- 10 143 383
- DE-A1- 102016 119 766
- DE-A1- 102018 111 342
- US-A- 4 342 793
- US-A1- 2004 097 611

## Beschreibung

Die Erfindung betrifft ein Verfahren zur Herstellung eines faserverstärkten polymeren End-Iosprofils.

Ein derartiges Verfahren ist beispielsweise aus der EP 2 528 723 B1 oder aus der DE 10 2016 119766 A1 bekannt. Bei Fenster- bzw. Tür-Hohlkammerprofilen zur Einfassung von Glasscheiben besteht einerseits grundsätzlich das Bedürfnis, eine möglichst gute Wärmedämmung zu realisieren und andererseits auch das Erfordernis einer ausreichenden mechanischen Stabilität. Sofern ein entsprechendes Fenster- bzw. Tür-Hohlkammerprofil durch Extrusion aus unverstärktem, thermoplastischem Material, beispielsweise Polyvinylchlorid (PVC) hergestellt wird, ist daher aus statischen Gründen in der Regel der Einschub eines metallischen Armierungsprofiles in mindestens eine der Hohlkammern erforderlich. Hierdurch wird zwar die mechanische Stabilität erheblich verbessert, dieser Vorteil muss jedoch wegen dem gleichzeitig als Wärmebrücke fungierenden metallischen Armierungsprofil mit deutlich schlechteren Wärmedämmeigenschaften erkauft werden.

Um diesem Nachteil zu begegnen, haben sich daher bereits seit geraumer Zeit mit Fasern verstärkte PVC-Profile im Markt etabliert. So ist beispielsweise in der EP 2 191 090 B1 die Einbringung von Kurzglasfasern in die PVC-Matrix beschrieben, wodurch in vielen Anwendungsfällen auf den Einsatz einer Metallarmierung verzichtet werden kann.

Um die Länge der im Wege der Extrusion eingebrachten Verstärkungsfasern im Endprodukt zu erhöhen, wird in der EP 2 953 775 A1 vorgeschlagen, die entsprechenden Verstärkungsfasern vor ihrer Einbringung in den Extrusionsprozess als Granulat mit einer PVC-Ummantelung zu versehen, welche einen gewissen Schutz gegen die hohe mechanische Beanspruchung der Fasern im Extrusionsprozess gewährleistet. Hierdurch kann eine größere Faserlänge im Endprodukt und damit eine höhere mechanische Steifigkeit sichergestellt werden.

Eine weitere Verbesserung der mechanischen Eigenschaften bei gleichzeitig guter Wärmedämmung wird durch die Einbringung von nicht metallischen Verstärkungsbändern, beispielsweise Organoblechen, in das Hohlkammerprofil erreicht. Ein solches Verfahren ist in der EP 2 493 673 A1 beschrieben. Diese Organobleche verfügen in der Regel über endlose Fasern und können damit die mechanische Belastbarkeit des Profils noch einmal beträchtlich erhöhen.

Mit den vorbeschriebenen Maßnahmen kann gegenüber einem unverstärkten PVC-Profil eine erhebliche Steigerung der Steifigkeit erreicht werden. Für viele Anwendungsfälle ist dies jedoch noch nicht ausreichend. Aus diesem Grund werden beispielsweise für Tür- oder Fensterrahmen mit sehr großen Verglasungen über mehrere Quadratmeter häufig immer noch Aluminiumprofile eingesetzt, welche über eine herausragende mechanische Festigkeit verfügen. Nachteilig bei diesen Profilen sind selbstredend die schlechten Wärmedämmeigenschaften, weshalb derartige Profile mit vergleichsweise aufwendigen thermischen Trennkonstruktionen ausgerüstet werden müssen. Ein weiterer Nachteil von Aluminiumprofilen ist auch, dass sie ein vergleichsweise hohes Gewicht aufweisen und sehr teuer sind.

Verfahren mit den eingangs beschriebenen Merkmalen sind beispielsweise aus der EP 2 528 723 B1 sowie der WO 2018/072878 A1 bekannt. Mit Hilfe der darin offenbarten Pultrusionsprozesse lassen sich Endlosprofile mit sehr hoher Steifigkeit herstellen. Diese Verfahren haben jedoch in der Regel den Nachteil, dass sie im Vergleich zu Extrusionsprozessen nur mit vergleichsweise niedriger Produktionsgeschwindigkeit betrieben werden können, da eine vollflächige Imprägnierung der Verstärkungsfasern mit dem Matrixmaterial für die mechanische Performance der hergestellten Endlosprofile von essenzieller Bedeutung ist.

Vor diesem Hintergrund liegt der Erfindung die Aufgabe zugrunde, ein Verfahren mit den eingangs beschriebenen Merkmalen anzugeben, das eine erhöhte Produktionsgeschwindigkeit erlaubt.

Erfindungsgemäß wird diese Aufgabe dadurch gelöst, dass die Aushärtung des Kernprofils mittels eines Dual-Cure-Verfahrens erfolgt. Dual-Cure-Verfahren sind in der Praxis grundsätzlich z.B. zur Aushärtung duroplastischer Materialien bekannt und bezeichnen ganz allgemein die Kombination zweier unterschiedlicher Aushärtungsmechanismen, z.B. durch eine Bestrahlung mit Lichtwellen einerseits und mit langwelligen Wärmestrahlen andererseits. Eine klassische Pultrusion mit thermischer Aushärtung ist langsam und oftmals nicht wirtschaftlich. Eine Elektronenstrahlhärtung oder Härtung mittels UV-Strahlung ermöglicht zwar deutlich kürzere Aushärtezeiten und höhere Produktionsgeschwindigkeiten. Nachteilig bei einer reinen Strahlenhärtung ist jedoch die begrenzte Eindringtiefe der Strahlung, so dass hiermit nur eine Härtung oberflächennaher Bereiche des Pultrusionsprofils möglich ist. Durch den erfindungsgemäßen Einsatz eines Dual-Cure-Verfahrens können die Vorteile der einzelnen Härtungsmechanismen kombiniert und eine vollständige Durchhärtung des Endlosprofils auch bei hohen Durchlaufgeschwindigkeiten erzielt werden. Vorteilhaft ist es in diesem Zusammenhang insbesondere auch, wenn das Einsatzmaterial für die Pultrusionsmatrix dünnflüssig ist, um die Benetzung der Verstärkungsfasern mit diesem Material zu erleichtern. Vorzugsweise weist daher das Einsatzmaterial zur Herstellung der polymeren Matrix bei 20 °C eine dynamische Viskosität von 100 - 10.000 MPas, vorzugsweise 500 - 1000 MPas, auf. Der Gewichtsanteil der Verstärkungsfasern im Kernprofil beträgt zweckmäßigerweise 50 bis 85 %. Die Wandstärke des Kernprofils kann z.B. im Bereich von 1 bis 8 mm liegen.

Beispielsweise enthält das Einsatzmaterial zur Herstellung des Kernprofils mindestens zwei Komponenten, die mit unterschiedlichen Härteverfahren ausgehärtet werden können. So kann z.B. eine erste Komponente UV-reaktiv sein (z.B. ein Acrylat und/oder Methacrylat mit Isocyanat-reaktiven Gruppen) und beispielsweise mit einer zweiten Komponente kombiniert werden, die funktionelle Gruppen für einen anderen Härtungsmechanismus, z.B. thermisch oder mittels Mikrowelle, enthält. Z.B. kann diese zweite Komponente eine X-H, z.B. OH-, NH- oder SH-, terminierte Komponente enthalten. Generell können dem Matrixmaterial des Kernprofils zusätzlich Pigmente, z.B. Farbpigmente, Flammschutzmittel (z.B. Aluminiumtrihydrat), UV-Stabilisatoren, Anti-Haft- Additive (z.B. Siloxan, Fluor) und/oder grenzflächenaktive Additive zugesetzt sein. Im Rahmen einer bevorzugten Ausführungsform der Erfindung enthält das Einsatzmaterial zur Herstellung des Kernprofils Polythiole, Methylmethacrylate, Lactame oder stabilisierte Einkomponentensysteme, insbesondere stabilisierte Thiole. Die vorgenannten Materialien zeichnen sich zweckmäßigerweise dadurch aus, dass sie leicht fließend sind und daher eine Imprägnierung der Verstärkungsfasern mit hoher Produktionsgeschwindigkeit erlauben. Diese Materialien können beispielsweise mit Isocyanaten, Epoxyharzen, Acrylaten oder Polysulfiden kombiniert werden.

Der endlose Strang mit Verstärkungsfasern kann unidirektional in Profilrichtung ausgerichtete endlose Verstärkungsfasern enthalten. Im Rahmen der Erfindung liegt es aber auch, dass dieser Verstärkungsstrang mindestens ein Roving, mindestens ein Gewebe, mindestens ein Vlies oder mindestens ein Tape aus Verstärkungsfasern enthält. Die Verstärkungsfasern selbst sind vorzugsweise als Glas- und/oder Carbonfasern und/oder Mineral- und/oder Polymer- und/oder Naturfasern ausgebildet.

Erfindungsgemäß setzt sich das Dual-Cure-Verfahren aus einer UV-Härtung sowie einer thermischen Härtung zusammen. Hierbei kann insbesondere die thermische Härtung der UV-Härtung nachgeschaltet sein. Selbstverständlich liegt es auch im Rahmen der Erfindung, wenn mehr als zwei Härtungsverfahren zum Einsatz kommen, also das erfindungsgemäße Dual-Cure-Verfahren durch mindestens einen weiteren Härtungsprozess ergänzt wird. Im Rahmen der Erfindung liegt es ferner, dass eine thermische Aushärtung bei deutlich erhöhten Temperaturen, z.B. oberhalb 100 °C, mit einem zweiten Aushärtungsprozess kombiniert wird, der bei Raumtemperatur stattfindet. Selbstverständlich können die einzelnen vorgenannten Härtungsverfahren auch beliebig miteinander zu einem Dual-Cure-Verfahren in beliebiger Reihenfolge kombiniert werden, also z.B. eine UV-Härtung mit einer nachgeschalteten Härtung bei Raumtemperatur sowie eine UV-Härtung mit einer nachgeschalteten Elektronenstrahl-Härtung oder umgekehrt u.s.w.

Zur Verbesserung der Oberflächengüte des Endlosprofils oder auch zu dessen Einfärbung wird zweckmäßigerweise das Kernprofil unmittelbar nach seiner Formgebung - sozusagen analog zur Vorgehensweise bei einer Coextrusion - mit einer extrudierten äußeren, thermoplastischen Beschichtung versehen, die vorzugsweise unverstärkt, also frei von Verstärkungsfasern ist. Hierbei ist es vorteilhaft, wenn die Beschichtung aus einem auf dem Kernprofil haftenden Polymer, insbesondere einem Polyacrylat, einem Polyester oder einem Polyamid, hergestellt wird. Im Rahmen der Erfindung liegt es ferner, dass dem Material der Beschichtung vor dem Auftrag auf das Kernprofil Farbpigmente zugesetzt werden.

Gemäß einer bevorzugten Ausführungsform der Erfindung ist der zweite Härtungsvorgang des Dual-Cure-Verfahrens eine thermische Härtung, wobei der hierfür erforderliche Wärmeeintrag durch den Auftrag der heißen Extrusionsschmelze der Beschichtung auf das Kernprofil erfolgt. Das heißt, dass hierbei der Verfahrensschritt der thermischen Härtung des Kernprofils mit dem Auftrag der Beschichtung kombiniert wird, was sowohl die Verfahrenstechnik vereinfacht als auch den Energiebedarf zur Profilherstellung reduziert.

Gegenstand der Offenbarung ist ferner ein Endlosprofil, welches mit dem vorstehend beschriebenen, erfindungsgemäßen Verfahren hergestellt wurde. Insbesondere kann das Endlosprofil als Blendrahmen- oder Flügelrahmenprofil eines Fensters oder einer Tür ausgebildet. Im Rahmen der Erfindung liegt es beispielsweise aber auch, dass das Endlosprofil als, vorzugsweise im Querschnitt symmetrisches, Schienenprofil für einen Schiebedeckel einer Kühltruhe ausgebildet ist. Hierbei wird dem Endlosprofil zweckmäßigerweise während oder nach der Pultrusion in Achsrichtung eine Bogenform aufgeprägt. Andere Verwendungszwecke des erfindungsgemäß hergestellten Endlosprofils werden hierdurch jedoch nicht ausgeschlossen. Das erfindungsgemäße Verfahren kann mit Produktionsgeschwindigkeiten von mindestens 2 m/min, z.B. 2 - 20 m/min, insbesondere 3 - 8 m/min, betrieben werden.

Im Folgenden wird die Erfindung anhand einer lediglich ein Ausführungsbeispiel darstellenden Zeichnung ausführlich erläutert. Es zeigen schematisch:
- Fig. 1: ein erfindungsgemäßes Verfahren zur Herstellung eines Fenster-Hohlkammerprofils;
- Fig. 2a-c: beispielsweise mit einem Verfahren gemäß Fig.1 hergestellte Hohlkammerprofile in einer Querschnittsdarstellung,
- Fig. 3a,b: weitere Ausführungsformen der erfindungsgemäßen Lehre

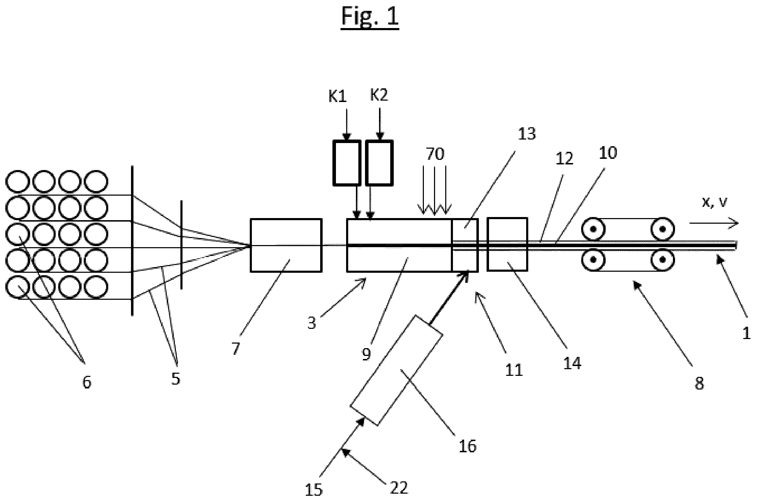

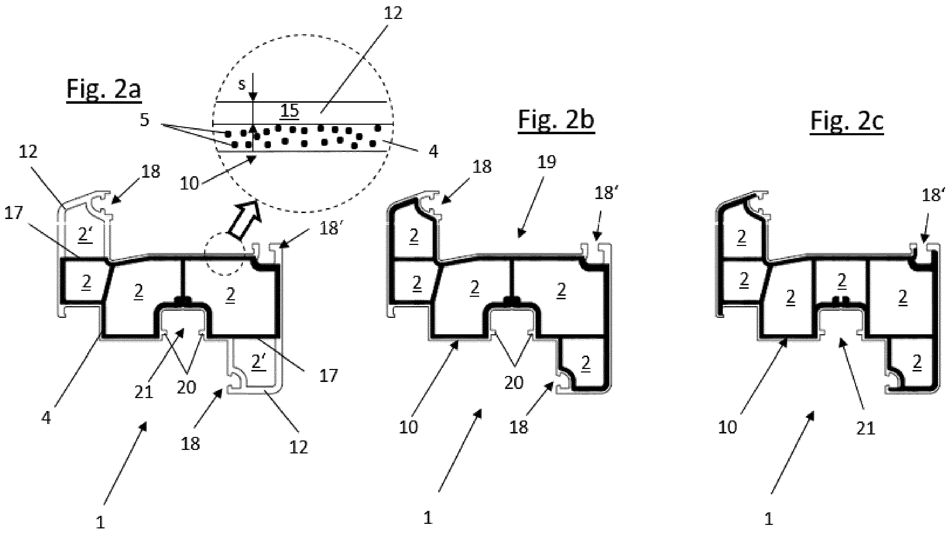

Die Fig. 1 zeigt ein erfindungsgemäßes Verfahren zur Herstellung eines endlosen faserverstärkten polymeren Fenster-Hohlkammerprofils 1. Das Hohlkammerprofil 1 weist ein Kernprofil 10 mit mehreren Hohlkammern 2, 2' (vergl. Fig. 2a-c) auf, welches mithilfe eines Pultrusionsverfahrens 3 bei 80 bis 240 °C, vorzugsweise 120 - 200 °C hergestellt wird. Während dieses Pultrusionsverfahrens 3 werden in die polymere Matrix 4 des Kernprofils 10 endlose Verstärkungsglasfasern 5 integriert, die zunächst von Rollen 6 abgezogen und in einer Vorwärmstation 7 vorgewärmt werden. Mittels eines Ziehwerkzeugs 8 wird das frisch hergestellte Kernprofil 10 über die endlosen Verstärkungsfasern 5 in Produktionsrichtung x aus dem beheizten Pultrusionswerkzeug 9 herausgezogen. Hierbei wird die polymere Matrix 4 dieses Kernprofils 10 aus dünnflüssigen Komponenten K1 und K2 hergestellt, die mit zwei unterschiedlichen Härtungsmechanismen im Wege eines Dual-Cure-Verfahrens ausgehärtet werden. Die Komponenten K1 und K2 zur Herstellung der polymeren Matrix 4 weisen bei 20 °C eine dynamische Viskosität von 500 - 1000 MPas auf und enthalten beispielsweise Polythiole, Methylmethacrylate, Lactame oder stabilisierte Thiole.

Erfindungsgemäß setzt sich das Dual-Cure-Verfahren aus einer UV-Härtung der Komponente K1 sowie einer thermischen Härtung der Komponente K2 zusammen, wobei die thermische Härtung der UV-Härtung nachgeschaltet ist. Es erfolgt somit zunächst unmittelbar nach der Imprägnierung der Verstärkungsfasen 5 mit den Komponenten K1 und K2 eine UV-Härtung der Komponente K1 durch entsprechende Bestrahlung 70, beispielsweise mittels eines Quecksilberdampfstrahlers oder LEDs.

Das mit der Pultrusion 3 hergestellte Kernprofil 10 wird zur Verbesserung der Oberflächengüte des Hohlkammerprofils 1 nach seiner Formgebung bei einer Temperatur von 160 - 300 °C, vorzugsweise 200 - 260 °C, sozusagen im Wege einer Coextrusion 11, mit einer extrudierten äußeren Beschichtung 12 aus einem auf dem Kernprofil 10 haftenden unverstärkten Polymer 15, z.B. einem Polyacrylat, einem Polyester oder einem Polyamid versehen. Beim Ausführungsbeispiel gemäß Fig. 1 findet diese Coextrusion 11 mittels eines Extruders 16 unmittelbar im Anschluss an die Pultrusion 3 ohne Zwischenkühlung statt. Hierbei ist das Coextrusionswerkzeug 13 unmittelbar hinter dem Austritt des Werkzeuges 9 für die Pultrusion 3 angeordnet und ummantelt das Kernprofil 10 online. Erfindungsgemäß ist der zweite Härtungsvorgang des Dual-Cure-Verfahrens zur Aushärtung der Komponente K2 eine thermische Härtung, wobei der hierfür erforderliche Wärmeeintrag durch den Auftrag der heißen Extrusionsschmelze der Beschichtung 12 auf das Kernprofil 10 erfolgt. Folglich sind also im Ausführungsbeispiel der zweite Schritt des Dual-Cure-Verfahrens zur Aushärtung der Komponente K2 und die Coextrusion 11 der Beschichtung 12 zu einem kombinierten Verfahrensschritt zusammengefasst. Erst danach erfolgt die Abkühlung des coextrudierten Hohlkammerprofils 1 in einer Abkühlvorrichtung 14, z.B. einem Wasserbad. Die Produktionsgeschwindigkeit v zur Herstellung des Hohlkammerprofils 1 beträgt mindestens 2 m/min, z.B. 2 - 10 m/min.

Die Fig. 2a bis 2c zeigen hergestellte Fenster-Hohlkammerprofile 1, welche beispielsweise mit dem in Fig. 1 beschriebenen Verfahren produziert werden können. Der vergrößerte Ausschnitt der Fig. 2a zeigt die in die thermoplastische Matrix 4 des (in Fig. 2a bis 2c schwarz eingefärbten) Kernprofils 10 eingebetteten Verstärkungsfasern 5 sowie die hier übertrieben dick dargestellte Beschichtung 12 aus dem Beschichtungsmaterial 15. Die Beschichtung 12 weist eine Schichtdicke s von 0,1 bis 1 mm, vorzugsweise 0,2 bis 0,5 mm auf. Der Gewichtsanteil der Verstärkungsfasern 5 im Kernprofil 10 beträgt im Ausführungsbeispiel mehr als 80 %. Beim Ausführungsbeispiel gemäß Fig. 2a werden vom mehrere Hohlkammern 2 aufweisenden Kernprofil 10 und der Beschichtung 12 gemeinsam zwei weitere Hohlkammern 2' gebildet. Entsprechend erfolgt in diesem Ausführungsbeispiel lediglich ein bereichsweiser Auftrag der Beschichtung 12 auf die äußere Oberfläche des Kernprofils 10; in den Anschlussbereichen 17 der von Kernprofil 10 und Beschichtung 12 gemeinsam gebildeten Hohlkammern 2' erfolgte keine Beschichtung der äußeren Oberfläche des Kernprofils 10, da diese Anschlussbereiche 17 nach außen hin nicht sichtbar sind. Die Hohlkammerprofile 1 umfassen ferner in allen Ausführungsbeispielen gemäß den Fig. 2a bis 2c Funktionselemente 18, 18' in Form von Aufnahmenuten für (nicht dargestellte) Dichtungselemente bzw. Rastelemente, wobei die Aufnahmenuten 18 in den Fig. 2a und 2b jeweils allein vom Material 15 der Beschichtung 12 - also ohne Kernprofil 10 - gebildet werden. In Fig. 2c hingegen werden auch die Funktionselemente 18 jeweils durch einen beschichteten Querschnittsbereich des Kernprofils 10 gebildet, d.h. das Kernprofil 10 trägt hier wesentlich zur Gestalt der Funktionselemente bei. In den Fig. 2a bis 2c ist das Fenster-Hohlkammerprofil 1 als Flügelrahmenprofil ausgebildet. Entsprechend weist hier das Kernprofil 10 jeweils einen Falzgrund 19 zur Aufnahme mindestens einer (nicht dargestellten) Glasscheibe auf. In den Fig. 2b und 2c wird die Beschichtung 12 nahezu vollflächig auf die äußere Oberfläche des Kernprofils 10 aufgetragen. Lediglich der Nutgrund der jeweils rechten Aufnahmenut 18' wird allein vom Kernprofil 10 gebildet, wobei dies auch für das Ausführungsbeispiel gemäß Fig. 2a gilt. Ferner werden in allen drei Ausführungsbeispielen gemäß Fig. 2a bis 2c lediglich von der Beschichtung 12 Vorsprünge 20 einer Euronut 21 des Hohlkammerprofils 1 zur Aufnahme von (nicht dargestellten) Verriegelungselementen gebildet.

Die in Fig. 2a bis 2c dargestellten Hohlkammerprofile 1 können durch den Zusatz von Farbpigmenten 22 zum Material 15 der Beschichtung 12 vor dem Auftrag auf das Kernprofil 10 entsprechend eingefärbt werden. Neben dem Einsatz klassischer Weißpigmente 22, z.B. Titandioxid, können insbesondere auch Farbpigmente 22 verwendet werden, die der Beschichtung 12 eine "echte" Farbe verleihen und z.B. zu einer roten, grünen, blauen, grauen, gelben oder auch schwarzen Einfärbung des Hohlkammerprofils 1 führen. In den Ausführungsbeispielen nicht dargestellt, jedoch im Rahmen der Erfindung ebenfalls möglich ist es, dass die äußere Beschichtung als Flüssigkeit und / oder Pulver auf das Kernprofil 10 aufgetragen und danach zu einer Lackschicht ausgehärtet wird.

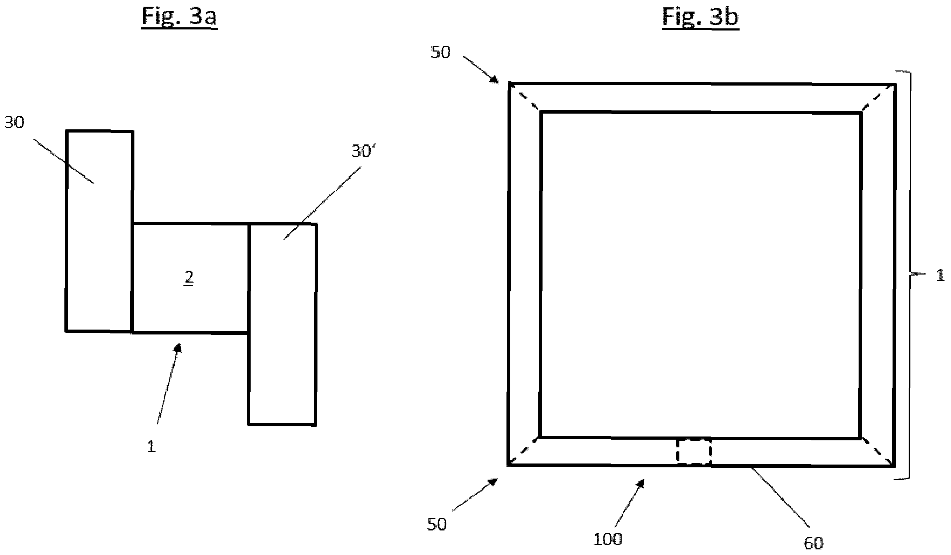

Beim Ausführungsbeispiel gemäß Fig. 3a ist das Fenster-Hohlkammerprofil 1 als Kernelement ausgebildet, welches innen- und außenseitig jeweils mit einer Schalung 30, 30' versehen ist. Diese Schalungen 30, 30' können jeweils aus Aluminium, Holz oder ebenfalls aus Kunststoff bestehen und prägen das Design des aus den Elementen 1, 30, 30' zusammen gesetzten Gesamtprofils. Bei der Bildung eines Tür- oder Fensterrahmens mit z.B. vier Ecken kann eine jeweilige Eckverbindung der Schalungen 30, 30' untereinander entfallen, da die Eckverbindungen des gesamten Rahmens durch entsprechende Eckverschweißungen von den auf Gehrung geschnittenen Fenster-Hohlkammerprofilen 1 (hier also den Kernelementen) hergestellt werden.

Beim Ausführungsbeispiel gemäß Fig. 3b wird ein rechteckiger Hohlkammerrahmen 100 eines Fenster- oder Türprofils dadurch gebildet, dass zunächst ein erfindungsgemäßes Hohlkammerprofil 1 in den Ecken 50 jeweils auf entsprechende Gehrung geschnitten wird, so dass dort nur die Außenwandung 60 verbleibt. Durch jeweiliges Knicken der verbleibenden Außenwandung 60 in den Ecken 50 wird danach der Hohlkammerrahmen 100 gebildet. Somit besteht der gesamte (üblicherweise aus vier Profilen zusammen gesetzte) Hohlkammerrahmen 100 hier aus einem einzigen Hohlkammerprofil 1, welches in einer der Ecken mit sich selbst zum geschlossenen Rahmen 100 verbunden, vorzugsweise verschweißt wird. Vorteilhaft hierbei ist, dass die Verstärkungsfasern 5 in der Außenwandung 60 komplett umlaufen und somit zu einer sehr hohen Stabilität beitragen.

## Patentansprüche

1. Verfahren zur Herstellung eines faserverstärkten polymeren Endlosprofils (1),
- wobei das mindestens eine Hohlkammer (2, 2') aufweisende Endlosprofil (1) ein Kernprofil (10) aufweist, das mit Hilfe eines Pultrusionsverfahrens hergestellt wird, und
- wobei während des Pultrusionsverfahrens in die polymere Matrix (4) des Kernprofils (10) mindestens ein endloser Strang mit Verstärkungsfasern (5) integriert wird,
**dadurch gekennzeichnet, dass** die Aushärtung des Kernprofils (10) mittels eines Dual-Cure-Verfahrens erfolgt und dass sich das Dual-Cure-Verfahren aus einer UV-Härtung sowie einer thermischen Härtung zusammensetzt.

2. Verfahren nach Anspruch 1, **dadurch gekennzeichnet, dass** das Einsatzmaterial (K1, K2) zur Herstellung der polymeren Matrix (4) bei 20 °C eine dynamische Viskosität von 100 - 10.000 MPas, vorzugsweise 500 - 1000 MPas, aufweist.

3. Verfahren nach Anspruch 1 oder 2, **dadurch gekennzeichnet, dass** das Einsatzmaterial (K1, K2) zur Herstellung des Kernprofils (10) Polythiole, Methylmethacrylate, Lactame oder stabilisierte Einkomponentensysteme, insbesondere stabilisierte Thiole, enthält.

4. Verfahren nach einem der Ansprüche 1 bis 3, **dadurch gekennzeichnet, dass** die thermische Härtung der UV-Härtung nachgeschaltet ist.

5. Verfahren nach einem der Ansprüche 1 bis 4, **dadurch gekennzeichnet, dass** das Kernprofil (10) unmittelbar nach seiner Formgebung mit einer extrudierten äußeren, thermoplastischen Beschichtung (12) versehen wird.

6. Verfahren nach Anspruch 5, **dadurch gekennzeichnet, dass** die Beschichtung (12) aus einem auf dem Kernprofil (10) haftenden Polymer (15), insbesondere einem Polyacrylat, einem Polyester oder einem Polyamid, hergestellt wird.

7. Verfahren nach Anspruch 5 oder 6, **dadurch gekennzeichnet, dass** dem Material (15) der Beschichtung (12) vor dem Auftrag auf das Kernprofil (10) Farbpigmente (22) zugesetzt werden.

8. Verfahren nach einem der Ansprüche 5 bis 7, **dadurch gekennzeichnet, dass** der zweite Härtungsvorgang des Dual-Cure-Verfahrens eine thermische Härtung ist, wobei der hierfür erforderliche Wärmeeintrag durch den Auftrag der heißen Extrusionsschmelze der Beschichtung (12) auf das Kernprofil (10) erfolgt.

## Claims

1. Method for producing a fibre-reinforced polymer continuous profile (1),
- wherein the continuous profile (1) having at least one hollow chamber (2, 2') comprises a core profile (10) which is produced by means of a pultrusion process, and
- wherein, during the pultrusion process, at least one continuous strand with reinforcing fibres (5) is integrated into the polymer matrix (4) of the core profile (10),
**characterised in that** curing of the core profile (10) is carried out by means of a dual-cure process and **in that** the dual-cure process consists of UV curing and thermal curing.

2. Method according to claim 1, **characterised in that** the feed material (K1, K2) for producing the polymer matrix (4) has a dynamic viscosity of 100-10,000 mPa·s at 20 °C, preferably 500-1,000 mPa·s.

3. Method according to claim 1 or 2, **characterised in that** the feed material (K1, K2) for producing the core profile (10) contains polythiols, methyl methacrylates, lactams or stabilised one-component systems, in particular stabilised thiols.

4. Method according to one of claims 1 to 3, **characterised in that** the thermal curing is subsequent to the UV curing.

5. Method according to one of claims 1 to 4, **characterised in that** the core profile (10) is provided, immediately after its forming, with an extruded outer thermoplastic coating (12).

6. Method according to claim 5, **characterised in that** the coating (12) is produced from a polymer (15) adhering to the core profile (10), in particular a polyacrylate, a polyester or a polyamide.

7. Method according to claim 5 or 6, **characterised in that** colour pigments (22) are added to the material (15) of the coating (12) before application to the core profile (10).

8. Method according to one of claims 5 to 7, **characterised in that** the second curing operation of the dual-cure process is thermal curing, wherein the heat input required for this is provided by applying the hot extrusion melt of the coating (12) to the core profile (10).

## Revendications

1. Procédé de fabrication d'un profilé continu polymère renforcé de fibres (1),
- le profilé continu (1) présentant au moins une chambre creuse (2, 2') comprenant un profilé noyau (10) qui est fabriqué au moyen d'un procédé de pultrusion, et
- au cours du procédé de pultrusion, au moins une mèche continue avec des fibres de renforcement (5) étant intégrée dans la matrice polymère (4) du profilé noyau (10),
**caractérisé en ce que** la réticulation du profilé noyau (10) est effectuée au moyen d'un procédé à double durcissement et **en ce que** le procédé à double durcissement se compose d'un durcissement UV ainsi que d'un durcissement thermique.

2. Procédé selon la revendication 1, **caractérisé en ce que** le matériau d'alimentation (K1, K2) destiné à la fabrication de la matrice polymère (4) présente à 20 °C une viscosité dynamique de 100 à 10 000 mPa·s, de préférence de 500 à 1 000 mPa·s.

3. Procédé selon la revendication 1 ou 2, **caractérisé en ce que** le matériau d'alimentation (K1, K2) destiné à la fabrication du profilé noyau (10) contient des polythiols, des méthacrylates de méthyle, des lactames ou des systèmes monocomposants stabilisés, en particulier des thiols stabilisés.

4. Procédé selon l'une des revendications 1 à 3, **caractérisé en ce que** le durcissement thermique est postérieur au durcissement UV.

5. Procédé selon l'une des revendications 1 à 4, **caractérisé en ce que** le profilé noyau (10) est pourvu, immédiatement après sa mise en forme, d'un revêtement extérieur thermoplastique extrudé (12).

6. Procédé selon la revendication 5, **caractérisé en ce que** le revêtement (12) est réalisé à partir d'un polymère (15) adhérant au profilé noyau (10), en particulier un polyacrylate, un polyester ou un polyamide.

7. Procédé selon la revendication 5 ou 6, **caractérisé en ce que** des pigments colorants (22) sont ajoutés au matériau (15) du revêtement (12) avant l'application sur le profilé noyau (10).

8. Procédé selon l'une des revendications 5 à 7, **caractérisé en ce que** la deuxième opération de durcissement du procédé à double durcissement est un durcissement thermique, l'apport de chaleur requis à cet effet étant assuré par l'application de la masse fondue d'extrusion chaude du revêtement (12) sur le profilé noyau (10).
